# EUROPÄISCHE PATENTSCHRIFT

(11) **EP 1 995 515 B1**
(45) Veröffentlichungstag und Bekanntmachung des Hinweises auf die Patenterteilung: **30.10.2013**
(21) Anmeldenummer: 07010225.6
(22) Anmeldetag: 23.05.2007
(51) Int. Cl.: F23C 3/00, F23C 7/06, F23C 9/00

(54) **Unterstützter FLOX-Betrieb und Brenner dafür**
Supported FLOX operation and burner therefor
Fonctionnement FLOX pris en charge et son brûleur

(43) Veröffentlichungstag der Anmeldung: 26.11.2008
(73) Patentinhaber: WS-Wärmeprozesstechnik GmbH, 71272 Renningen (DE)
(72) Erfinder: Wünning, Joachim G., Dr., 71229 Leonberg (DE); Wünning, Joachim A., Dr., 71229 Leonberg (DE)
(74) Vertreter: Rüger, Barthelt & Abel

(56) Entgegenhaltungen:
- EP-A1- 0 463 218
- EP-B1- 0 685 683
- DE-C1- 19 740 788
- US-A- 3 729 285

## Beschreibung

Die Erfindung betrifft ein Verfahren zur Herbeiführung einer Brennstoff-Oxidation in einem rezirkulierten Abgasstrom zur Beheizung eines Volumens, insbesondere bei Temperaturen des Volumens unterhalb der Zündtemperatur des Brennstoffs, sowie einen dafür eingerichteten Brenner.

Aus der Patentschrift EP 0 463 218 A1 ist ein Verfahren zum Betrieb eines Brenners bekannt, der erste Brennstoff- und Luftzuführmittel zum FLOX^{®}-Betrieb (flammlose Oxidation), zweite Luftzuführmittel zum Aufheizbetrieb und nicht näher beschriebene Steuermittel zur Regulierung der Brennstoff- und Luftzuführmittel aufweist.

In der US A 3 729 285 ist ein Brenner offenbart mit einer ersten Brennstoff- und Luftzuführung, zur Zuführung von Brennstoff und Verbrennungsluft in ein Reaktionsvolumen, und einen Brennraum, der mit dem Reaktionsvolumen verbunden ist. Der Brenner verfügt außerdem über eine zweite Brennstoff- und Luftzuführung, zur Zuführung von Brennstoff und Verbrennungsluft in den Brennraum. Die Steuereinrichtung zu Brennerbetrieb ist nicht näher beschrieben.

Aus der EP 0 685 683 B1 ist es bekannt, zu beheizende Volumina, wie beispielsweise Ofenräume oder die Innenräume von Strahlrohren mittels flammenloser Oxidation eines Brennstoffs zu beheizen. Um eine flammenlose Oxidation herbeizuführen, wird in dem betreffenden Volumen eine starke Rezirkulation der Verbrennungsgase herbeigeführt. In diese werden vorgewärmte Luft und Brennstoff injiziert. Bei Reaktionstemperaturen von unter 1500 °C erfolgt dabei eine gleichmäßige Wärmefreisetzung in einem größeren Volumenabschnitt bei geringer thermischer NOx-Bildung. Dies setzt allerdings voraus, dass in dem Ofenraum ausreichende Temperaturen herrschen. Dazu muss der Ofenraum zunächst aufgeheizt werden. Dies geschieht gemäß der EP 0 685 683 B1, wie auch gemäß beispielsweise der WO 2007/017056 A1, mittels einer in den Brenner integrierten Brennkammer, in die sowohl Brennstoff als auch Verbrennungsluft eingeleitet werden können. Das sich ausbildende Gemisch wird in der Brennkammer gezündet. Die entstehenden heißen Gase verlassen die Brennkammer und gelangen in das aufzuheizende Volumen. Solche Brenner sind für zwei Betriebszustände eingerichtet:
1. Verbrennung mit stabiler Flamme in der Brennkammer, solange die Temperatur in dem zu beheizenden Volumen unter der Zündtemperatur des verwendeten Brennstoffs liegt.
2. Verbrennung außerhalb der Brennkammer in dem zu beheizenden Volumen, sobald dessen Temperatur über der Zündtemperatur liegt. Der hohe Austrittsimpuls der Luft bewirkt die gewünschte starke Rezirkulation der Verbrennungsgase im Volumen, wodurch hohe Temperaturen und die thermische NOx-Bildung vermieden werden.

Es existieren Anwendungsfälle, bei denen das zu beheizende Volumen beispielsweise aufgrund der Größe oder der Beschaffenheit seines Inhalts nur langsam aufgeheizt werden kann oder soll. Es ist auch möglich, dass die gewünschte Endtemperatur prozessbedingt relativ niedrig, beispielsweise unterhalb der Zündtemperatur des Brennstoffs liegt.

Wenn in diesen Fällen die Beheizung des Ofenraums mittels Flamme erfolgt, entstehen lokal (in und an der Flamme) hohe Temperaturen, was NOx-Bildung zur Folge hat.

Der im as Stand der Technik nach EP 0 463 218 A1 offenbarte Brenner, ist zwischen Aufheizbetrieb mit Flamme und flammenloser Oxidation umschaltbar. Die Umschaltung der Luft kann von der Brennkammer auf Luftzuführungsdüsen ganz oder teilweise erfolgen. Dabei tritt jedoch ein Umschalten zwischen der Betriebsart mit Flamme und der Betriebsart ohne Flamme auf.

Ist die Ofenraumtemperatur für den Betrieb mit flammenloser Oxidation noch zu niedrig, kann eine Hilfsheizeinrichtung genutzt werden, die den Ofenraum elektrisch beheizt.

Die zusätzliche elektrische Beheizung eines Ofenraums stößt häufig auf Ablehnung.

Die US-A-3729285 offenbart einen Brenner mit mehrstufiger Oxidation. Der Brenner weist eine Brennkammer auf, die mit Luft und Brennstoffzuführungen versehen ist. Über diese kann ein innerhalb der Brennkammer oxidierender Brennstoffstrom und ein außerhalb der Brennkammer oxidierender Brennstoffstrom erzeugt werden. Es werden anstelle einer einzigen stöchometrischen Mischung zwei gesonderte Brennstoffluftmischungen erzeugt, und zwar eine fette und eine magere. Damit soll insgesamt der NOx Ausstoß gesenkt werden.

Es ist Aufgabe der Erfindung, die NOx-Bildung auch bei solchen Temperaturen im Heizraum zu mindern, die unterhalb der Zündtemperatur liegen.

Diese Aufgabe wird mit dem Verfahren nach Anspruch 1 wie auch mit dem Brenner nach Anspruch 4 gelöst:

Zur Durchführung des erfindungsgemäßen Verfahrens, weist der Brenner erste Brennstoff- und Luftzuführmittel zum FLOX^{®}-Betrieb (FLOX ist eine eingetragene Marke der WS-Wärmetechnik GmbH) sowie zweite Brennstoff- und Luftzuführmittel zum Aufheizbetrieb auf. Zu dem Brenner gehören außerdem Steuermittel zur Regulierung der genannten Brennstoff- und Luftzuführmittel. Das Steuermittel ist dazu eingerichtet, einen unterstützten FLOX^{®}-Betrieb aufrecht zu erhalten, bei dem sowohl das erste Brennstoff- und Luftzuführmittel als auch das zweite Brennstoff- und Luftzuführmittel aktiv ist. Optional kann das Steuermittel auch für eine Umschaltung zwischen dem FLOX^{®}-Betrieb und dem Aufheizbetrieb ausgelegt sein.

Die erfindungsgemäße unterstützte FLOX^{®}-Betriebsart kann genutzt werden, wenn das zu beheizende Volumen eine Temperatur aufweist, die unterhalb der Zündtemperatur des verwendeten Brennstoffs liegt. Eine in dem zu beheizenden Volumen aufrecht erhaltene Rezirkulationsströmung ist somit nicht heiß genug, um eine stabile flammenlose Oxidation des Brennstoffs sicher aufrecht zu erhalten. Die fehlende Wärmeenergie wird aus einer Wärmequelle geliefert, die von dem zweiten Brennstoff- und Luftzuführmittel gleichzeitig gespeist wird. Diese Wärmequelle ist beispielsweise eine Brennkammer, in der eine stabile Flamme brennt. Die heißen Abgase dieser Brennkammer treten als Strahl in das Volumen ein und mischen sich mit den kühleren Rezirkulationsgasen des zu beheizenden Volumens. Dies ergibt einen (Ab)gasstrom, in dem FLOX^{®}-Betrieb trotz niedrigerer Volumentemperatur stattfinden kann. Soweit in der Brennkammer oder sonstigen Wärmequelle aufgrund einer evtl. vorhandenen Flamme NOx-Bildung stattfindet, betrifft dies nur einen Bruchteil des insgesamt eingesetzten Brennstoff- und Luftstroms, so dass im Vergleich zum vollständig flammengestützten Aufheizen des Volumens weniger NOx erzeugt wird. Das Verfahren eignet sich auch für Fälle, in denen nicht vollständig zwischen FLOX^{®}-Betrieb und Flammenbetrieb umgeschaltet werden soll. Dadurch wird es möglich, das Temperaturprofil in dem Ofenraum bei FLOX^{®}-Betrieb und Flammenbetrieb anzunähern. Außerdem kann Mehrstoffbetrieb z.B. durch Betrieb der Vorheizquelle (Brennkammer) mit einem ersten Brennstoff und Betrieb der anderen Brennstoffzuführeinrichtung mit einem zweiten, andern Brennstoff ermöglicht werden.

Vorzugsweise umfasst das erfindungsgemäße Verfahren nicht nur den genannten unterstützten FLOX^{®}-Betrieb sondern zusätzlich einen Anheizbetrieb, der unterhalb einer ersten Temperaturschwelle stattfindet und beispielsweise durch ausschließliche Aktivierung des zweiten Brennstoff- und Luftzuführmittels erzielt wird. Beispielsweise ist hier lediglich die Brennkammer in Betrieb.

Zusätzlich kann das erfindungsgemäße Verfahren umfassen, dass in einer weiteren Betriebsart oberhalb einer zweiten Temperaturschwelle reiner FLOX^{®}-Betrieb genutzt wird, indem lediglich das zweite Brennstoff- und Luftzuführmittel aktiviert wird.

Der erfindungsgemäße Brenner und das erfindungsgemäße Verfahren eignen sich somit insbesondere zur Wärmeerzeugung für Prozesse die bei niedrigeren Temperaturen stattfinden oder lange Aufheizphasen durchlaufen. Es werden dabei insbesondere die NOx-Emissionen in Anheiz- oder Übergangsphasen gesenkt.

Das Verfahren und der Brenner eignen sich sowohl für gasförmige als auch für flüssige und gegebenenfalls auch für partikulare, beispielsweise durch Luft oder Abgas fluidisierte Festbrennstoffe.

weitere Einzelheiten der Erfindung ergeben sich aus der Beschreibung, der Zeichnung oder Ansprüchen. Die Beschreibung ist dabei auf wesentliche Aspekte der Erfindung und sonstiger Gegebenheiten beschränkt. Die Zeichnung zeigt weitere Einzelheiten und ergänzt die Beschreibung. Es zeigen:
Figur 1 einen erfindungsgemäßen Brenner in schematisierter längs geschnittener Darstellung,
Figur 2 den Brenner nach Figur 1 in einer Stirnansicht,
Figur 3 eine abgewandelte Ausführungsform eines Brenners in Stirnansicht und
Figur 4 Betriebsarten des Brenners nach Figur 1 als Diagramm anhand der jeweiligen Aktivität oder Aktivierung der beiden Luft- und Brennstoffzuführeinrichtungen 11 und 25 (untere beiden Diagramme).

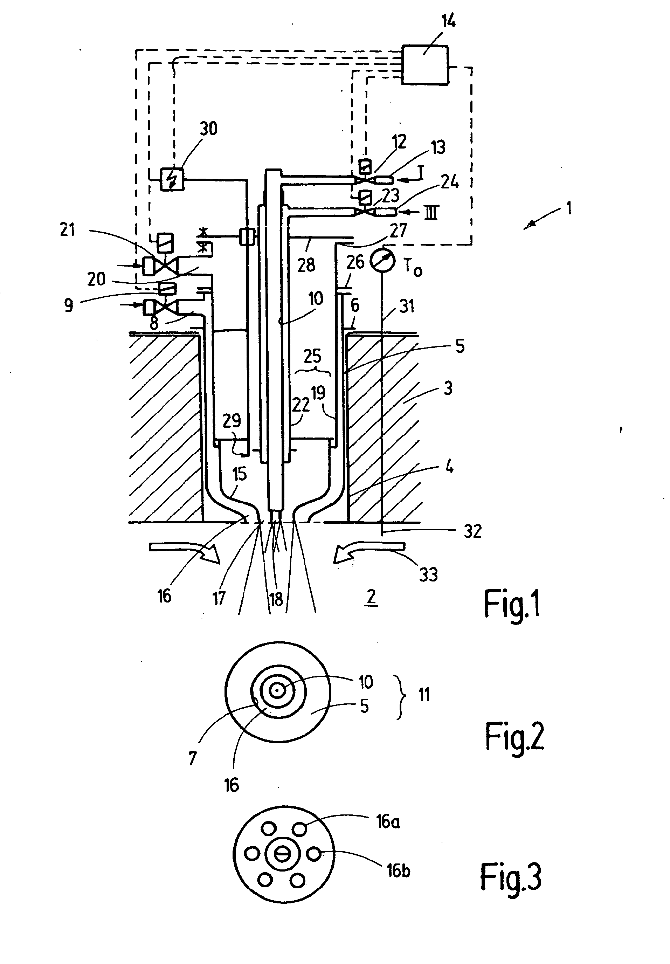

In Figur 1 ist ein Brenner 1 veranschaulicht, der zur Beheizung eines Ofenraums 2 oder sonstigen Volumens, wie beispielsweise des Innenraums eines Strahlrohrs dient. Der Ofenraum 2 ist von einer Ofenwand 3 mit einer Öffnung 4 umschlossen, in die der Brenner 1 eingesetzt ist. Der Brenner 1 weist ein Mantelrohr 5 auf, das über einen Flansch 6 oder mittelbar über anderweitige Mittel an der Ofenwand 3 abgedichtet gesichert ist. Das Mantelrohr 5 weist ungefähr in Höhe der Innenfläche der Ofenwand 3 eine Luftaustrittsöffnung 7 auf, über die Luft in den Ofenraum 2 strömen kann. Zur Speisung des entsprechenden, von dem Mantelrohr 5 umschlossenen Luftzufuhrkanal dient ein Anschluss 8, der vorzugsweise über ein Ventil 9 oder ein sonstiges Stellorgan reguliert ist.

Konzentrisch zu dem Mantelrohr 5 ist ein Brennstoffzuführrohr 10 vorgesehen, das auch als BrennStofflanze bezeichnet werden kann. Seine Mündung liegt etwa auf Höhe der Innenfläche der Ofenwand 3 oder an einer entsprechenden Stelle, von der aus der Brennstoff als Strahl in den'Ofenraum 2 eingeleitet werden kann. Das Mantelrohr 5 und das zentrale Brennstoffzuführrohr 10 bilden ein erstes Brennstoff- und Luftzuführmittel 11. Das Brennstoffzuführrohr 10 ist beispielsweise über ein Ventil 12 oder ein anderes geeignetes Stellorgan an einen Brennstoffzuführanschluss 13 angeschlossen. Die Ventile 9, 12 sind an eine Steuereinrichtung 14 angeschlossen, die somit das erste Brennstoffund Luftzuführmittel 11 kontrolliert. Die Steuereinrichtung 14 kann beispielsweise eine mikrocontrollerbasierte Einrichtung oder ähnliches sein.

Innerhalb des Mantelrohrs 5 ist eine Brennkammer 15 vorgesehen, durch die sich das Brennstoffzuführrohr 10 vorzugsweise hindurch erstreckt. Ihre Mündung liegt vorzugsweise auf Höhe der Innenfläche der Ofenwand 3. Sie legt mit der Luftaustrittsöffnung 7 des Mantelrohrs 5 eine Ringdüse 16 fest. Die Mündung 17 der Brennkammer 15 kann jedoch auch gegen die Öffnung des Mantelrohrs 5 zurückversetzt sein. Ebenso kann das Brennstoffzuführrohr 10 an seinem offenen Ende mit einer Düse 18 versehen sein, die sich auch innerhalb der Brennkammer 15 befinden kann, um einen Brennstoffstrahl durch die Brennkammer 15 und deren Mündung 17 hindurch in den Ofenraum 2 zu richten.

Die Brennkammer 15 wird vorzugsweise über ein Luftzuführrohr 19 mit Verbrennungsluft versorgt, das z.B. konzentrisch zu dem Wandlerrohr 5 angeordnet sein kann. Es kann auch durch ein oder mehrere exzentrische Rohre gebildet sein. Das Luftzuführrohr 19 ist zu einem Anschluss 20 geführt, der mit vorzugsweise nicht vorgewärmter Frischluft versorgt wird. Der Luftzustrom kann über ein Ventil 21 oder ein sonstiges Stellorgan reguliert werden, das seinerseits wiederum von der Steuereinrichtung 14 gesteuert wird. Alternativ kann an Stelle des Ventils 21 auch eine Blende, eine Drossel, ein handeinstellbares Ventil oder dergleichen vorgesehen sein. In diesem Fall strömt auch bei reinem FLOX®-Betrieb immer etwas Luft durch die Brennkammer 15, was aber tolerierbar oder in vielen Fällen auch gewünscht ist.

Die Brennkammer 15 wird außerdem über ein Brennstoffzuführrohr 22 gespeist, das z.B. über ein Ventil 23 an einen Brennstoffzuführanschluss 24 angeschlossen ist. Das Ventil 23 ist vorzugsweise an die Steuereinrichtung 14 angeschlossen und wird von dieser gesteuert.

Das Luftzuführrohr 19 und das Brennstoffzuführrohr 22 bilden ein zweites Brennstoff- und Luftzuführmittel 25, das von der Steuereinrichtung 14 kontrolliert, d.h. gesteuert oder geregelt betrieben wird. Das Luftzuführrohr 19 kann über einen Flansch 26 außerhalb des Ofenraums 2 luftdicht mit dem Mantelrohr 5 und über einen weiteren Flansch 27 mit einem Brennerkopf 28 dicht verbunden und somit abgeschlossen sein.

Der Brennkammer 15 ist vorzugsweise eine Zündelektrode 29 mit einem Zündgenerator 30 zugeordnet, der von der Steuereinrichtung 14 gesteuert wird. Außerdem können ein oder mehrere Temperaturfühler 31 vorgesehen sein, die sich z.B. durch die Ofenwand 3 oder auch durch den Brenner 1 erstrecken, um die Temperatur in dem Ofenraum 2 zu erfassen. Insbesondere ist sie dabei so angeordnet, dass sein temperaturempfindlicher Teil 32 die Temperatur der Rezirkulationxetrömung 33 in dem Ofenraum 2 erfasst.

Abweichend von dem Brenner 1 nach Figur 1 kann an Stelle der Ringdüse 16 auch eine Serie von z.B. einzelnen kreisförmigen Luftaustrittsöffnungen 16a, 16b usw. vorgesehen sein. Des Weiteren ist es möglich, an Stelle des Mantelrohrs 5 einen Rekuperator vorzusehen, der beispielsweise an seiner Außenseite mit einer aus dem Ofenraum 2 auegeleiteten Abgasströmung in Berührung steht. Ein solches Rekuperator-Mantelrohr kann sowohl an seiner Innenseite als auch an seiner Außenseite mit Vorsprüngen, Flossen oder dergleichen versehen sein, um den Wärmeaustausch zu verbessern. Außerdem kann die Zuluft ausgehend von dem Anschluss 8, durch einen Kranz abgeflachter Warmetauscherrohr, so genannter Spaltrohre, geleitet werden, die außen von Abgas umspült sind und deren Öffnungen wie die Öffnungen 16a, 16b einzelne, nun aber vorgewärmte Frischluftstrahlen in den Ofenraum 2 leiten.

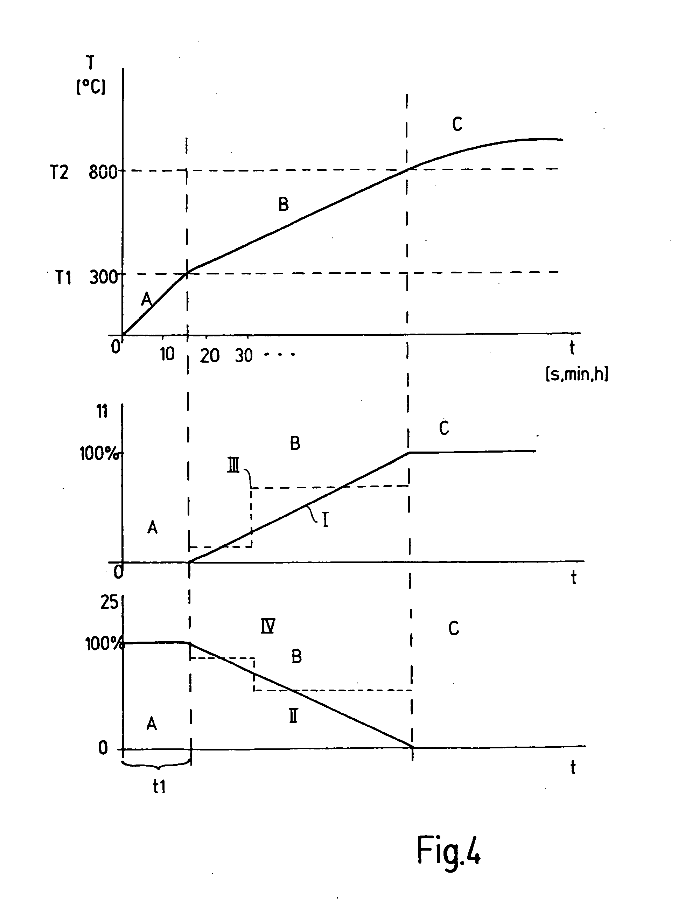

Der Betrieb des insoweit beschriebenen Brenners 1 gestattet mindestens eine unterstützte FLOX®-Betriebsart, im vorliegenden Ausführungsbeispiel insgesamt aber drei verschiedene Betriebsarten, nämlich a) eine Vorwärmbetriebsart, b) eine unterstützte FLOX^{®}-Betriebsart und c) eine reine FLOX^{®}-Betriebsart. Zur Erläuterung derselben wird auf Figur 4 Bezug genommen. Es wird zu einem Zeitpunkt t = 0 davon ausgegangen, dass die Temperatur zu Beginn des Betriebs unterhalb einer ersten Temperaturgrenze T1 von z.B. 300°C liegt. Die Steuereinrichtung 14 aktiviert nun ausschließlich das zweite Brennstoff- und Luftzuführmittel 25, indem sie die Ventile 21, 23 öffnet und die Ventile 9, 12 geschlossen hält. Außerdem werden Zündimpulse an der Zündelektrode 29 erzeugt. Es findet nun in der Brennkammer 15 eine Verbrennung beispielsweise unter Ausbildung einer stabilen Flamme statt. Die heißen Abgase dieser Verbrennung treten an der Mündung 17 aus und in den Ofenraum 2 über. Sie erwärmen diesen für eine bestimmte Zeitspanne. Die Betriebsart ist in Figur 4 als Betriebsart A für ein erstes Zeitintervall t1 gekennzeichnet. Die Temperatur T in dem Ofenraum 2 steigt dabei zügig an. Während der gesamten Zeitspanne t1 ist das erste Brennstoff- und Luftzuführmittel 11 inaktiv während das zweite Brennstoff- und Luftzuführmittel 25 ausschließlich aktiv ist.

Sobald die erste Temperaturschwelle T1 erreicht ist, beginnt die unterstützte FLOX®-Betriebsart B. Dazu beginnt die Steuereinrichtung 14, das erste Brennstoff- und Luftzuführmittel 11 zu aktivieren und das zweite Brennstoff- und Luftzuführmittel 25 zu deaktivieren, was durch entsprechende Ansteuerung der Ventile 9, 12, 21, 23 erfolgen kann. Dies kann, wie in Figur 4 Veranschaulicht, beginnend bei 0 bzw. 100 % kontinuierlich oder auch stufenartig erfolgen. In der unterstützten FLOX®-Betriebsart B wird ein Teil der zugeführten Luft und des zugeführten Brennstoffs in der Brennkammer 15 verbrannt, um einen heißen Abgasstrahl zu erzeugen. Ein anderer Teil wird über die Ringdüse 16 und die Düse 18 in den Ofenraum 2 gestrahlt. Die Verteilung wird dabei vorzugsweise anhand der gemessenen Temperatur der Rezirkulationsströmung 33 so festgelegt, dass die Mischung der heißen Gase der Brennkammer 15 mit den vergleichsweise kühleren Gasen der Rezirkulationsströmung 33 einen Mischgasstrahl ergibt, dessen Temperatur gerade eben über einer Zündtemperatur T2 liegt. Somit wird der über die Brennstofflanze bzw. Düse 18 eingestrahlte Anteil des Brennstoffs von einem Abgas/Luft-Strahl getragen, in dem eine flammenlose Oxidation stattfinden kann, obwohl die Temperatur der Rezirkulationsströmung 33 unterhalb der dazu erforderlichen Grenze T2 liegt.

Die Unterstützung der flammenlosen Oxidation durch die heißen Gase der Brennkammer 15 kann, wie in Figur 4 anhand der solid gezeichneten Kurven I und II veranschaulicht, mit zunehmender Temperatur T kontinuierlich abnehmen, Alternativ kann der Vorgang in ein oder mehreren Stufen umgeschaltet werden, wie eine punktierte Kurve III, IV in Figur 4 zeigt, oder zu Beginn und zu Ende der kontinuierlichen Verstellung eine Stufe zeigen. In beiden Fällen kann der Anteil des in der Brennkammer 15 verbrannten Anteils des Brennstoffs auf 10 bis 50 % der Gesamtmenge beschränkt werden.

Stellt die Steuereinrichtung 14 fest, dass die Temprratur der Rezirkulationsströmung 33 den Temperaturgrenzwert T2 übersteigt, der beispielsweise durch die Zündtemperatur des verwendeten Brennstoffs festgelegt wird und im veranschaulichenden Beispiel z.B. 800°C betragen kann, schaltet sie das Brennstoff- und Luftzuführmittel 25 gänzlich ab und verlässt sich nun vollends auf den FLOX^{®}-Betrieb innerhalb des Ofenraums 2. In dieser Betriebsart C kann durch das Luft- und Brennstoff zuführmittel 11 weiterhin Luft strömen.

Die vorgestellte Erfindung gestattet die Erzielung niedriger NOx-Werte nicht nur im FLOX®-Betrieb (Betriebsart C) sondern insbesondere auch bei niedrigeren Temperaturen in dem Ofenraum, wie sie entweder gewünscht werden oder beim Aufheizen zwangsläufig auftreten (Betriebsart A und insbesondere B). Die Erzielung niedrigerer NOx-Werte wird ermöglicht, indem mittels einer Wärmequelle, wie beispielsweise einer Brennkammer 15, ein für den FLOX®-Betrieb an sich zu kalter Rezirkulationsgasstrom 33 aufgeheizt wird, um einen (großen) Teil des eingesetzten Brennstoffs in diesem aufgeheizten Gasstrom in der Ofenkammer 2 oder einem sonstigen Volumen flammenlos, insbesondere ohne lokale Temperaturspitzen über 1500°C umsetzen zu können.

Das erfindungsgemäße Verfahren betrifft den Betrieb mindestens eines Brenners mit ersten Brennstoff- und Luftzuführmitteln 11 für den FLOX®-Betrieb und zweiten Brennstoff- und Luftzuführmitteln 25 für einen Zusatzheizbetrieb. Es sind Steuermittel 14 vorgesehen, um die Brennstoff- und Luftzuführmittel 11, 25 zu steuern und zwar so, dass durch die Zusatzheizung die für den FLOX®-Betrieb erforderliche Temperatur in dem Bereich unmittelbar vor dem Brenner 1 erzielt wird.

### Bezugszeichen

- 1: Brenner
- 2: Ofenraums
- 3: Ofenwand
- 4: Öffnung
- 5: Mantelrohr
- 6: Flansch
- 7: Luftaustrittsöffnung
- 8: Anschluss
- 9: Ventil
- 10: Brennstoffzuführrohr
- 11: erstes Brennstoff- und Luftzuführmittel
- 12: Ventil
- 13: Brennstoffzuführanschluss
- 14: Steuereinrichtung
- 15: Brennkammer/ Brennraum
- 16: Ringdüse
- 17: Mündung der Brennkammer 15
- 18: Düse
- 19: Luftzuführrohr
- 20: Anschluss
- 21: Ventil
- 22: Brennstoffzuführrohr
- 23: Ventil
- 24: Brennstoffzuführanschluss
- 25: zweites Brennstoff- und Luftzuführmittel
- 26, 27: Flansch
- 28: Brennerkopf
- 29: Zündelektrode
- 30: Zündgenerator
- 31: Temperaturfühler
- 32: temperaturempfindlicher Teil
- 33: Rezirkulationsströmung

## Patentansprüche

1. Verfahren zum Betrieb mindestens eines Brenners, der erste Brennstoff- und Luftzuführmittel (11) zum FLOX^{®}-Betrieb, zweite Brennstoff- und Luftzuführmittel (25) zum Aufheizbetrieb und Steuermittel (14) zur Regulierung der Brennstoff- und Luftzuführmittel (11, 25) aufweist, wobei das Steuermittel (14) dazu eingerichtet ist, einen unterstützten FLOX^{®}-Betrieb (B) aufrecht zu erhalten, in dem sowohl das erste Brennstoff- und Luftzuführmittel (11) als auch das zweite Brennstoff- und Luftzuführmittel (25) aktiv ist, und im Brennraum mittels einer stabil brennenden Flamme heiße Gase erzeugt werden.

2. Verfahren nach Anspruch 1, **dadurch gekennzeichnet, dass** das Steuermittel (14):
- unterhalb einer ersten Temperaturschwelle den Anheizbetrieb (A),
- oberhalb der ersten und unterhalb einer zweiten, höheren Temperaturschwelle den unterstützten FLOX^{®}betrieb (B) und
- oberhalb der zweiten Temperaturschwelle den FLOX^{®}-Betrieb (C) vorgibt.

3. Verfahren nach Anspruch 1, **dadurch gekennzeichnet, dass** das Verhältnis der Gas- und/oder Luftmenge, die über das erste Brennstoff- und Luftzuführmittel (11) zugeführt wird, zu der Gas- und/oder Luftmenge, die über das zweite Brennstoff- und Luftzuführmittel (25) zugeführt wird, variabel ist.

4. Brenner (1),
mit einer ersten Brennstoffzuführung (10), die zur Zuführung von Brennstoff in ein Reaktionsvolumen (2) vorgesehen ist,
mit einer ersten Luftzuführung (5), die zur Zuführung von Verbrennungsluft in das Reaktionsvolumen (2) vorgesehen ist,
mit einem zur Unterhaltung einer Flamme eingerichteten Brennraum (15), der mit dem Reaktionsvolumen (2) verbunden und zur Unterhaltung einer Oxidationsreaktion eingerichtet ist,
mit einer zweiten Brennstoffzuführung (22), die zur Zuführung von Brennstoff in den Brennraum (15) vorgesehen ist,
mit einer zweiten Luftzuführung (25), die zur Zuführung von Verbrennungsluft in den Brennraum (15) vorgesehen ist,
**gekennzeichnet durch** eine Steuereinrichtung (14), die dazu eingerichtet ist, die Luftzufuhr und/oder die Brennstoffzufuhr zu dem Brennraum (15) und dem Reaktionsvolumen (2) so zu regulieren, dass in dem Brennraum mittels einer stabil brennenden Flamme heiße Gase erzeugt werden, die in dem Reaktionsvolumen (2) einen unterstützten Flox^{®}-Betrieb (B) aufrecht erhalten, in dem sowohl das erste Brennstoff- und Luftzuführmittel (11) als auch das zweite Brennstoff- und Luftzuführmittel (25) aktiv ist.

5. Brenner nach Anspruch 4, **dadurch gekennzeichnet, dass** der Brennraum (15) eine Brennkammer ist.

6. Brenner nach Anspruch 4, **dadurch gekennzeichnet, dass** wenigstens die erste Luftzuführung (5) einen Wärmetauscher, der zur Aufheizung von Verbrennungsluft mittels Abgaswärme aufweist.

7. Brenner nach Anspruch 4, **dadurch gekennzeichnet, dass** die erste Luftzuführung (5) und die zweite Luftzuführung (19) jeweils mit nicht aufgeheizter Frischluft gespeist sind.

8. Brenner nach Anspruch 4, **dadurch gekennzeichnet, dass** die erste Luftzuführung (5) mit einem ersten Regulierorgan (9) und die zweite Luftzuführung (19) mit einem zweiten Regulierorgan (21) versehen sind.

9. Brenner nach Anspruch 4, **dadurch gekennzeichnet, dass** das erste Regulierorgan (9) unabhängig von dem zweiten Regulierorgan (21) einstellbar ist.

## Claims

1. Method for operating at least one burner, which has first fuel and air supply means (11) for FLOX® operation, second fuel and air supply means (25) for heating operation and control means (14) for regulating the fuel and air supply means (11, 25), wherein the control means (14) is fitted to maintain an assisted FLOX® operation (B), in which both the first fuel and air supply means (11) and the second fuel and air supply means (25) are active, and hot gases are generated in the combustion space by means of a stably burning flame.

2. Method according to claim 1, **characterised in that** the control means (14):
• presets the heat-up operation (A) below a first temperature threshold,
• presets the assisted PLOX® operation (B) above the first and below a second higher temperature threshold, and
• presets the FLOX® operation (C) above the second temperature threshold.

3. Method according to claim 1, **characterised in that** the ratio of the quantity of gas and/or air supplied via the first fuel and air supply means (11) to the quantity of gas and/or air supplied via the second fuel and air supply means (25) is variable.

4. Burner (1)
with a first fuel supply (10), which is provided for the supply of fuel into a reaction space (2),
with a first air supply (5), which is provided for the supply of air into the reaction space (2),
with a combustion space (15) fitted for maintenance of a flame, which space is connected to the reaction space (2) and is fitted for maintenance of an oxidation reaction,
with a second fuel supply (22), which is provided for the supply of fuel into the combustion space (15),
with a second air supply (25), which is provided for the supply of air into the combustion space (15),
**characterised by** a control device (14), which is fitted to regulate the supply of air and/or the supply of fuel to the combustion space (15) and the reaction space (2) so that hot gases are generated in the combustion space by means of a stably burning flame, which gases maintain an assisted FLOX® operation (B) in the reaction space (2), in which operation both the first fuel and air supply means (11) and the second fuel and air supply means (25) are active.

5. Burner according to claim 4, **characterised in that** the combustion space (15) is a combustion chamber.

6. Burner according to claim 4, **characterised in that** at least the first air supply (5) has a heat exchanger for heating combustion air by means of combustion gas heat.

7. Burner according to claim 4, **characterised in that** the first air supply (5) and the second air supply (19) are respectively fed with unheated fresh air.

8. Burner according to claim 4, **characterised in that** the first air supply (5) is provided with a first regulating element (9) and the second air supply (19) is provided with a second regulating element (21).

9. Burner according to claim 4, **characterised in that** the first regulating element (9) is adjustable independently of the second regulating element (21).

## Revendications

1. Procédé pour faire fonctionner au moins un brûleur qui présente des premiers moyens d'amenée de combustible et d'air (11) en vue d'un fonctionnement en mode FLOX^{®}, des deuxièmes moyens d'amenée de combustible et d'air (25) en vue d'un fonctionnement en mode chauffage, et des moyens de commande (14) pour réguler les moyens d'amenée de combustible et d'air (11, 25), le moyen de commande (14) étant conçu pour entretenir un mode FLOX^{®} assisté (B) lors duquel aussi bien le premier moyen d'amenée de combustible et d'air (11) que le deuxième moyen d'amenée de combustible et d'air (25) sont actifs, et des gaz chauds sont produits dans l'enceinte de combustion au moyen d'une flamme brûlant de façon stable.

2. Procédé selon la revendication 1, **caractérisé en ce que** le moyen de commande (14) :
- au-dessous d'un premier seuil de température, prédéfinit le mode chauffage (A),
- au-dessus du premier et au-dessous d'un deuxième seuil de température, plus élevé, prédéfinit le mode FLOX^{®} assisté (B), et
- au-dessus du deuxième seuil de température, prédéfinit le mode FLOX^{®} (C).

3. Procédé selon la revendication 1, **caractérisé en ce que** le rapport entre la quantité de gaz et/ou d'air, qui est amenée par l'intermédiaire du premier moyen d'amenée de combustible et d'air (11), et la quantité de gaz et/ou d'air, qui est amenée par l'intermédiaire du deuxième moyen d'amenée de combustible et d'air (25), est variable.

4. Brûleur (1),
comprenant une première amenée de combustible (10) qui est prévue pour amener du combustible dans un volume de réaction (2),
comprenant une première amenée d'air (5) qui est prévue pour amener de l'air de combustion dans le volume de réaction (2),
comprenant une enceinte de combustion (15) qui est conçue pour entretenir une flamme, est reliée au volume de réaction (2) et est conçue pour entretenir une réaction d'oxydation,
comprenant une deuxième amenée de combustible (22) qui est prévue pour amener du combustible dans l'enceinte de combustion (15),
comprenant une deuxième amenée d'air (25) qui est prévue pour amener de l'air de combustion dans l'enceinte de combustion (15),
**caractérisé en ce qu'**il comprend
un dispositif de commande (14) qui est conçu pour réguler l'amenée d'air et/ou l'amenée de combustible à l'enceinte de combustion (15) et au volume de réaction (2) de telle manière que des gaz chauds soient produits dans l'enceinte de combustion au moyen d'une flamme brûlant de façon stable, gaz qui entretiennent un fonctionnement en mode FLOX^{®} assisté dans le volume de réaction (2), lors duquel aussi bien le premier moyen d'amenée de combustible et d'air (11) que le deuxième moyen d'amenée de combustible et d'air (25) sont actifs.

5. Brûleur selon la revendication 4, **caractérisé en ce que** l'enceinte de combustion (15) est une chambre de combustion.

6. Brûleur selon la revendication 4, **caractérisé en ce qu'**au moins la première amenée d'air (5) présente un échangeur de chaleur en vue du chauffage de l'air de combustion au moyen de la chaleur des gaz brûlés.

7. Brûleur selon la revendication 4, **caractérisé en ce que** la première amenée d'air (5) et la deuxième amenée d'air (19) sont alimentées respectivement avec de l'air frais non chauffé.

8. Brûleur selon la revendication 4, **caractérisé en ce que** la première amenée d'air (5) est dotée d'un premier organe de régulation (9) et la deuxième amenée d'air (19) est dotée d'un deuxième organe de régulation (21).

9. Brûleur selon la revendication 4, **caractérisé en ce que** le premier organe de régulation (9) peut être réglé indépendamment du deuxième organe de régulation (21).
